# FASCICULE DE BREVET EUROPEEN

(11) **EP 3 231 137 B1**
(45) Date de publication et mention de la délivrance du brevet: **15.07.2020**
(21) Numéro de dépôt: 15818001.8
(22) Date de dépôt: 10.12.2015
(51) Int. Cl.: H04L 12/24, H04L 12/26, G06F 9/50, H04L 29/08, H04L 12/715, H04L 12/703

(54) **RÉSEAU SUPERPOSÉ POUR RESEAU DE COMMUNICATION CONNECTANT DES CENTRES DE DONNÉES D'UN FOURNISSEUR DE SERVICES EN NUAGE**
ÜBERLAGERUNGSNETZWERK FÜR KOMMUNIKATIONSNETZ ZUR VERBINDUNG VON DATENZENTREN EINES CLOUD-DIENSTANBIETERS
OVERLAY NETWORK FOR COMMUNICATION NETWORK CONNECTING DATA CENTRES OF A CLOUD SERVICES PROVIDER

(30) Priorité: 12.12.2014 FR 1462364
(43) Date de publication de la demande: 18.10.2017
(73) Titulaire: WORLDLINE, 95870 Bezons (FR)
(72) Inventeur: FRESSANCOURT, Antoine, 59800 Lille (FR); GAGNAIRE, Maurice, 78400 Chatou (FR)
(74) Mandataire: Novagraaf Technologies
(86) Numéro de dépôt international: PCT/FR2015/053426
(87) Numéro de publication internationale: WO 2016/092224

(56) Documents cités:
- EP-A1- 2 773 067
- CN-A- 103 514 245
- RENUGA KANAGAVELU ET AL: "OpenFlow based control for re-routing with differentiated flows in Data Center Networks", NETWORKS (ICON), 2012 18TH IEEE INTERNATIONAL CONFERENCE ON, IEEE, 12 décembre 2012 (2012-12-12), pages 228-233, XP032376784, DOI: 10.1109/ICON.2012.6506562 ISBN: 978-1-4673-4521-7

## Description

### DOMAINE DE L'INVENTION

L'invention est relative au domaine de l'informatique en nuage, communément appelée « *cloud computing* » selon la terminologie en langue anglaise. Elle concerne plus particulièrement la gestion d'une infrastructure réseau permettant d'assurer la connectivité entre plusieurs centres de données et permettant un haut degré de résilience.

### CONTEXTE DE L'INVENTION

L'informatique en nuage permet d'abstraire les services offerts par une infrastructure de traitement de données de son architecture et de ses mécanismes technologiques sous-jacents. Elle permet notamment d'utiliser les puissances de calcul et/ou de stockage de serveurs informatiques distants et connectés par un réseau de communication, généralement le réseau Internet.

Un fournisseur de services en nuage, CSP (pour « Cloud Service Provider » en langue anglaise) peut ainsi offrir à ses clients ces puissances de calcul et/ou de stockage.

L'essor de ce type de modèle ces dernières années provoque un accroissement des exigences des clients sur la qualité de service attendue. Ainsi est apparue une demande importante pour que le service soit résiliant, c'est-à-dire qu'il ait la capacité de continuer à fournir le service demandé en cas de panne d'un équipement au sein du nuage.

Afin d'assurer cette exigence, les fournisseurs CSP déploient leurs services au sein de plusieurs centres de données, ou « datacenters » selon la terminologie en langue anglaise, redondants et distants les uns des autres. Ces centres de données sont interconnectés, généralement par des liens privés et dédiés au sein du réseau de communication reliant les centres de données. Ces liens peuvent être également redondants.

Toutefois, cette solution d'implémentation pose d'assez importants problèmes.

Notamment, elle oblige à sur-provisionner les ressources, puisque les redondances sont nécessairement fixées de façon statique. En outre, le temps de paramétrage est long. L'article "OpenFlow based control for re-routing with differentiated flows in Data Center Networks" (Networks (ICON), 2012 18th IEEE International Conférence) décrit un schéma de réacheminement bord à bord dans un réseau Openflow reliant des centres de données. CN103514245 décrit une architecture de commutateurs SDN utilisée pour implémenter une réseau overlay ou superposé.

### RESUME DE L'INVENTION

Le but de la présente invention est de fournir une solution palliant au moins partiellement les inconvénients précités.

A cette fin, un objet de la présente invention est un système, tel que revendiqué dans la revendication 1, comprenant un dispositif de contrôle et un réseau superposé à un réseau de communication destiné à connecter des centres de données d'un fournisseur de services en nuage.

Suivant des modes de réalisation préférés, l'invention comprend une ou plusieurs des caractéristiques suivantes qui peuvent être utilisées séparément ou en combinaison partielle entre elles ou en combinaison totale entre elles :
- les données transmises d'un premier centre de données vers un second centre de données sont acheminées en utilisant un mécanisme de routage par segments, lesdits segments étant fournis par ledit dispositif de contrôle ;
- les communications entre ledit dispositif de contrôle et lesdits nœuds particuliers sont conformes au mécanisme « Openflow » ;
- chacun desdits centres de données est connecté à au moins deux domaines du réseau de communication ;
- ledit nouveau chemin est calculé en fonction des besoins opérationnels d'une application utilisant lesdits centres de données.

Un autre objet de l'invention concerne un procédé de gestion d'un réseau superposé à un réseau de communication connectant des centres de données d'un fournisseur de services en nuage, tel que revendiqué dans la revendication 6.

Suivant des modes de réalisation préférés, l'invention comprend une ou plusieurs des caractéristiques suivantes qui peuvent être utilisées séparément ou en combinaison partielle entre elles ou en combinaison totale entre elles :
- chacun dudit au moins domaine est associé à un opérateur de services internet.
- chacun desdits centres de données est connecté à au moins deux domaines dudit réseau de communication (CN).

D'autres caractéristiques et avantages de l'invention apparaîtront à la lecture de la description qui suit d'un mode de réalisation préféré de l'invention, donnée à titre d'exemple et en référence aux dessins annexés. L'invention est définie par l'étendue des revendications.

### BREVE DESCRIPTION DES DESSINS

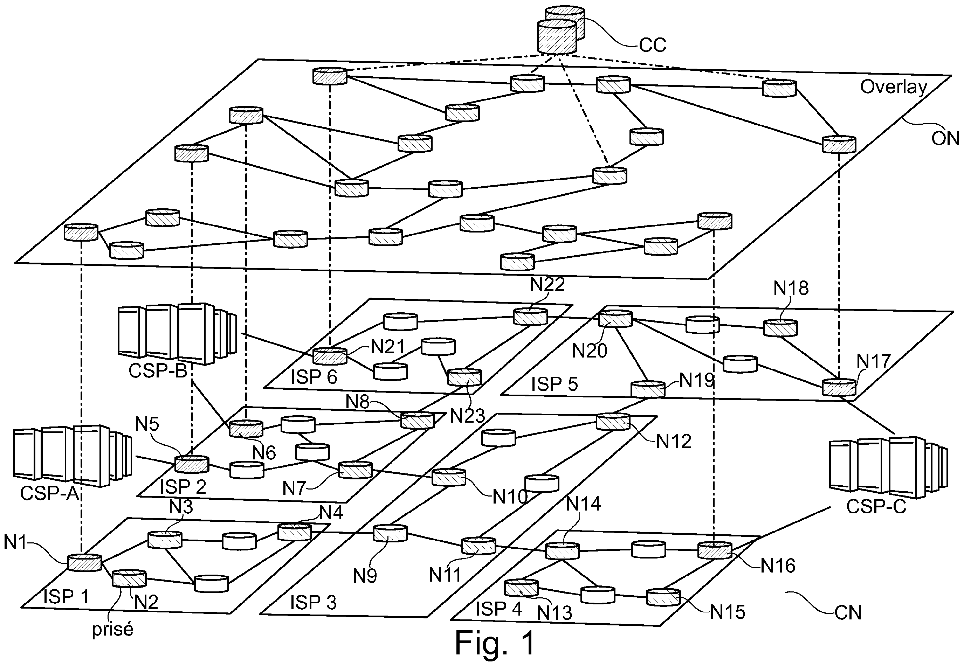

La figure 1 représente schématiquement un exemple de mise en œuvre d'un réseau superposé associé à un dispositif de contrôle selon l'invention.

### DESCRIPTION DETAILLEE DE L'INVENTION

La figure 1 représente un exemple de réseau de communication CN connectant des centres de données CSP-A, CSP-B, CSP-C et CSP-D. Ces centres de données peuvent appartenir à un même fournisseur de services en nuage (CSP pour « Cloud Service Provider » en langue anglaise) ou bien à plusieurs fournisseurs distincts mais ayant choisi de fédérer leur offre de service.

Ce réseau de communication CN est typiquement le réseau Internet. Il permet de connecter des centres de données situées en des localisations distantes les unes des autres.

La multiplicité des centres de données permet d'apporter une caractéristique de résilience au service en nuage : une panne locale sur un centre de données particulier n'impacte pas durablement le service fourni car celui-ci peut alors être déployé sur un autre centre de données. Un avantage de disposer de centres de données distants est d'éviter qu'une panne locale (alimentation...) impacte plusieurs centres de données.

Le réseau de communication CN est également prévu pour répondre à cette exigence de résilience. Pour ce faire, selon l'invention, il est à même de s'adapter rapidement à une panne locale afin que les communications entre les centres de données CSP-A, CSP-B, CSP-C et CSP-D ne soient pas interrompues mais se poursuivent avec la meilleure qualité de service possible (QoS pour « Quality of Service »).

Le réseau de communication CN comporte au moins un domaine mais préférablement plusieurs domaines. Chacun de ces domaines (ISP 1, ISP 2, ISP 3, ISP 4, ISP 5, ISP 6) peut être associé à un fournisseur de service internet distinct.

De la sorte, une panne impactant un fournisseur de service Internet n'affectera qu'un domaine, soit une partie du réseau de communication CN. Comme on le verra plus loin, celui-ci est prévu, selon l'invention, pour réagir à une telle panne et réallouer ses ressources pour que les communications passant par ce domaine et concernant le service en nuage soient réacheminées pour passer par d'autres domaines.

De façon connue en soi, le réseau de communication CN est composé d'un grand nombre de nœuds (par exemple des routeurs, en technologie « IP »...).

Selon l'invention, sur la base de ce réseau de communication CN, on constitue un réseau superposé, ou « overlay » selon la terminologie en langue anglaise plus commune, auquel on associe un dispositif de contrôle CC. Plus précisément, on considère un sous-ensemble de nœuds, N1, N2, N3... N22, que l'on appelle ici « nœuds particuliers» et qui forment ce réseau superposé.

Sur la figure 1, ce réseau superposé ON est représenté comme une surcouche du réseau de communication CN. Il s'agit toutefois d'une vue de l'esprit, dans la mesure où il ne s'agit que d'une abstraction qui permet de faire comprendre que d'un point de vue extérieur, et de celui d'un dispositif de contrôle CC, seul cette sous-partie du réseau de communication CN est considéré (ou « vue »). Les nœuds figurants dans la couche d' « overlay » ON sont les mêmes que les nœuds particuliers figurants en grisé dans la couche du réseau de communication CN.

Selon un mode de réalisation de l'invention, les nœuds particuliers sont de deux sortes :
- Des nœuds d'inflexion du routage, en grisé clair
- Des nœuds de bordure, en grisé très sombre.

En outre, le réseau superposé ON est associé à un dispositif de contrôle CC. Ce dispositif est central et est unique pour le fournisseur de service en nuage, tout du moins d'un point de vue fonctionnel (il peut lui-même être réparti sur plusieurs systèmes redondants).

Les nœuds particuliers sont paramétrés de sorte à former des chemins reliant les centres de données. Ces chemins peuvent être déterminés par le dispositif de contrôle CC. Ainsi, ce dernier n'ayant que la vue du réseau superposé OC, les chemins ne sont établis qu'au sein du sous-ensemble des nœuds particuliers.

D'un point de vue pratique, l'acheminement des données entre deux nœuds particuliers au sein du réseau de communication est donc lié au fonctionnement propre du réseau de communication et sort donc du cadre de l'invention. Par exemple sur la figure 1, deux chemins existent entre les nœuds particuliers N3 et N4, et le choix du chemin est donc laissé à la technologie propre au réseau de communication CN.

En ne traitant que les nœuds particuliers, le dispositif de contrôle a à sa disposition une vue globale mais réduite du réseau de communication. Le nombre de nœuds particuliers peut être important mais substantiellement moindre que celui des nœuds du réseau de communication, de sorte qu'il est à même de traiter les informations et d'établir, comme il sera vu plus tard, des nouveaux chemins de façon dynamique.

En outre, d'une façon générale, le dispositif de contrôle CC peut ne pas avoir accès à l'ensemble des nœuds d'un domaine géré par un fournisseur de service Internet. Par l'usage du réseau superposé ON, il a accès à une partie des nœuds qui échappent au contrôle du fournisseur de service Internet, ce qui lui permet de s'abstraire en partie de la politique de routage du fournisseur de service Internet. Notamment, les nœuds particuliers peuvent être situés dans les zones frontalières entre les domaines sur lesquels les fournisseurs de service Internet n'ont pas de contrôle direct et exclusif.

Le dispositif de contrôle CC peut donc établir la politique de routage de façon centralisée pour l'ensemble du réseau de communication CN. Celle-ci peut donc être indépendante des opérateurs de télécommunication et des fournisseurs de service Internet (ISP, « *Internet Service Providers* »), dans la mesure où il n'est pas assujetti à un SLA (« Service Level Agreement »), dont la mise en place et la gestion sont des opérations très complexes.

Par exemple, cette politique de routage peut utiliser un mécanisme de routage par segments, ou « *segment routing* » selon la terminologie en langue anglaise. Ce mécanisme est actuellement en cours de standardisation à l'IETF (« Internet Engineering Task Force »). D'autres mécanismes de routage sont également possibles dans le cadre de l'invention, tels, notamment, la mise en place de tunnels.

Avec le routage par segments, un nœud achemine un datagramme à l'aide d'une liste ordonnée d'instructions ou étiquettes appelées « segment », qui peuvent avoir des valeurs locales à un nœud ou globales à l'intérieur d'un domaine. Une liste de segments peut être fournie pour chaque flot de datagrammes.

Ainsi, le dispositif de contrôle CC peut déterminer, pour un flot donné entre deux centres de données, une liste de segments formant un chemin entre ces deux centres de données à travers le réseau de communication CN.

Ces segments peuvent correspondre aux nœuds d'inflexion de routage, qui ont donc un rôle très important puisque ce sont ceux-ci qui acheminent les flots de données selon la politique générale établie par le dispositif de contrôle centralisé CC.

Ces segments peuvent également correspondre à un lien entre les nœuds d'inflexion de routage, voire à un groupe de nœuds d'inflexion de routage.

Il est possible de ne donner que peu de segments, de sorte que le chemin réel pris par le flot de données n'est que peu contraint par la politique générale établie par le dispositif de contrôle CC. En dehors de ces contraintes, comme il a été vu plus haut, les mécanismes de routage propres au domaine concerné s'appliquent.

Il est également possible de fournir un très grand nombre de segments, de sorte que le chemin est fortement contraint par la politique générale.

Il est également possible d'établir des tunnels entre chaque nœud particulier N1, N2, N3... N22 d'un chemin donné.

Les nœuds de bordure ont pour rôle d'acheminer les flots de données entre les centres de données CSP-A, CSP-B, CSP-C, CSP-D et les domaines ISP 1, ISP 2, ISP 3, ISP 4, ISP 5, ISP 6.

Il peut être choisi de n'associer un nœud de bordure qu'à un unique couple centre de données / domaine. En outre, il peut être choisi que chacun des centres de données est connecté à au moins deux domaines. Ainsi, sur la figure 1, le centre de données CSP-A est connecté au domaine ISP 1 via le nœud de bordure N1, et au domaine ISP 2 via le nœud de bordure N5. De la sorte, on établit une redondance dans les moyens de connexion des centres de données avec le réseau de communication CN.

En outre, les nœuds de bordure ont pour rôle de faire le pont entre les mécanismes de routage interne au réseau au réseau superposé ON et le routage internet aux centres de données. Dans l'exemple d'une mise en œuvre utilisant un routage par segments, les nœuds de bordure écoutent continument les annonces de segment transmises par l'algorithme de routage de leur domaine (par exemple le protocole IGP pour « Interior Gateway routing Protocol), et transmet cette information au dispositif de contrôle CC. Ils annoncent aussi les segments afin d'être atteints depuis l'intérieur des centres de données. Ces mêmes segments peuvent également être utilisés par le dispositif de contrôle CC pour le routage au sein du réseau superposé ON.

Par ailleurs, les nœuds particuliers sont prévus pour transmettre des mesures locales au dispositif de contrôle CC. Tant les nœuds d'inflexion de routage que les nœuds de bordure peuvent être concernés par cette tâche de remontée d'informations. Les mesures locales transmises par les nœuds de bordure permettent au dispositif de contrôle d'acquérir une connaissance de ce qui se passe à l'intérieur de chaque centre de données.

Les mesures locales peuvent être effectuées par le nœud particulier lui-même sur le trafic de données qui transite par lui. Différents types de mesures peuvent être effectués et transmis vers le dispositif de contrôle : gigue, latence, perte de paquets, etc.

Le dispositif de contrôle CC étant centralisé, il reçoit par conséquent des mesures locales provenant des différents nœuds particuliers (potentiellement de l'ensemble des nœuds particulier du réseau superposé ON). Il peut ainsi obtenir une vision d'ensemble du comportement du réseau superposé ON, et déterminer une anomalie dès sa survenance au sein de ce réseau ON.

Une anomalie peut par exemple être un changement, éventuellement brutal, dans une des caractéristiques d'un nœud particulier. Il peut par exemple s'agir d'un accroissement du taux de perte de paquets, d'une augmentation de la gigue ou de la latence, etc.

Il peut alors réagir en déclenchant le calcul d'un (ou plusieurs) nouveau chemin au sein du réseau de communication. Ce nouveau chemin remplace le chemin impacté par l'anomalie. Si plusieurs chemins sont impactés par une anomalie, alors autant de nouveaux chemins peuvent être calculés par le dispositif de contrôle CC.

Par exemple, si l'anomalie est liée à un nœud particulier par lequel passe un chemin entre deux centres de données, un nouveau chemin reliant ces deux centres de données peut être calculé pour éviter le nœud particulier incriminé.

La transmission des mesures locales ainsi que le provisionnement d'informations relatives à un nouveau chemin vers les nœuds particuliers du réseau superposé ON peuvent être effectuées selon différents modes de réalisation. Notamment, le protocole Openflow, défini par l'« Open Networking Foundation » (ONF) peut être utilisé. Au sein d'un réseau de communication, ce protocole permet de séparer le contrôle de la transmission (« forwarding »). Il permet ainsi de déporter la couche de contrôle en dehors des équipements matériels des fabricants de routeurs et de commutateurs vers des équipements distants supportant des moyens logiciels.

Le dispositif de contrôle CC a pour rôle de s'assurer que les flots de données transmis entre les centres de données correspondent aux requis de qualité spécifiés par le fournisseur de services en nuage. Notamment, il est prévu pour détecter une anomalie dans le réseau de communication, via le réseau superposé ON, et réagir en déterminant un nouveau chemin pour contourner l'anomalie.

Comme on l'a vu, pour ce faire, il reçoit des mesures locales de la part des nœuds particuliers qui lui donnent une information complète du trafic au sein du réseau superposé ON et des centres de données CSP-A, CSP-B, CSP-C, CSP-D.

Plusieurs mécanismes peuvent être mis en œuvre par le dispositif de contrôle et entre celui-ci et les nœuds particuliers.

Une première mise en œuvre se base sur la détection de déviation des caractéristiques mesurées par les nœuds particuliers.

Selon cette mise en œuvre, le dispositif de contrôle CC met en œuvre un algorithme passif, c'est-à-dire basé uniquement sur des informations remontées depuis le réseau de communication.

Plus précisément, le dispositif de contrôle CC construit, à partir des mesures locales reçues des nœuds particuliers, une série temporelle. Cette série temporelle est représentative de l'évolution d'une caractéristique (gigue, latence, perte de paquet... par exemple) pour un nœud donné. En comparant cette série temporelle à des informations témoins, il peut déterminer une anomalie. Ces informations témoins peuvent avoir été préalablement établies dans une phase d'apprentissage.

Un exemple de phase d'apprentissage peut consister à :
- fournir au dispositif de contrôle CC une série de mesures de gigue, latence, pertes de paquets... collectées et remontées par les nœuds particuliers pendant une période de référence.
- Associer des observations de panne aux mesures fournies afin que le dispositif de contrôle CC associe les mesures collectées et les pannes constatées ;
- Analyser les mesures afin d'en déduire des règles permettant d'associer des pannes aux mesures collectées.
- Fournir ces règles à un moteur de règles inclus dans le dispositif de contrôle CC.

Dans une phase de traitement, le moteur de règles peut alors utiliser les règles préalablement établies pour déterminer les anomalies.

Par exemple de façon périodique, les nœuds particuliers du réseau superposé ON transmettent des mesures locales au dispositif de contrôle CC.

Celui-ci peut les stocker et les mettre en relation avec les mesures locales précédemment collectées de sorte à construire des séries temporelles. Ces séries temporelles (constituées de mesures historisées) sont fournies au moteur de règles.

Si le moteur de règles reconnait, dans les séries temporelles, un signal ou empreinte qui a été associé à une panne lors de la phase d'apprentissage, alors une anomalie est déterminée.

Cette anomalie correspondant à un nœud particulier ou à un lien associé à ce nœud particulier. Pour tout chemin passant par ce nœud ou ce lien, le dispositif de contrôle CC peut alors calculer un nouveau chemin qui l'évite. Ce nouveau chemin remplace alors le chemin précédent et les informations correspondant à ce nouveau chemin sont alors provisionnées sur les nœuds particuliers concernés du réseau superposé ON.

Par exemple, si le nœud particulier N7 est victime d'une panne, et si le chemin reliant les centres de données CSP-A et CSP-B passe par ce nœud N7, le dispositif de contrôle CC doit calculer un nouveau chemin. Un tel nouveau chemin peut par exemple passer par les nœuds N2, N4, N9, N10, N12, N19, N20, N22 et N21. Il peut alors provisionner ce nouveau chemin auprès d'un ensemble de nœuds particuliers concernés. Notamment, il peut définir ce chemin en établissant la liste appropriée de segments correspondants aux nœuds particuliers qui doivent être traversés selon ce nouveau chemin.

Ainsi, le trafic correspondant aux flots de données entre les centres de données CSP-A et CSP-B évite le nœud N7 impacté d'une panne, et la qualité de service globale n'est pas impactée par l'anomalie détectée.

Une autre mise en œuvre se base sur la détection de la perte de paquets par les nœuds particuliers et sur un algorithme actif/passif mis en place par le dispositif de contrôle CC.

Comme précédemment, le dispositif de contrôle CC reçoit passivement les mesures locales provenant des nœuds particuliers.

Dans un mode de réalisation, il s'intéresse au taux de perte de paquets et déclenche un traitement particulier uniquement si ce taux dépasse un certain seuil pour un nœud spécifique.

En ce cas, le dispositif de contrôle CC marque le nœud cible du flot de paquets comme potentiellement défaillant. On nomme dans la suite le nœud à l'origine de la remontée de l'information « nœud de signalement ».

Le dispositif de contrôle CC demande alors (c'est la phase active de l'algorithme) aux nœuds voisins du nœud potentiellement défaillant au sein du réseau superposé ON (y compris le nœud de signalement) d'émettre des paquets de sonde vers ce nœud potentiellement défaillant.

Ces paquets de sonde requièrent une réponse de la part du nœud potentiellement défaillant destinataire.

Il y a alors 3 possibilités :
- Les paquets de sonde envoyés sont sans réponse. On a affaire à une panne du nœud potentiellement défaillant. Le dispositif de contrôle CC détermine une anomalie sur ce nœud et calcule des nouveaux chemins évitant ce nœud.
- Seule une partie des paquets de sonde reste sans réponse (dont normalement le paquet de sonde envoyé par le nœud de signalement). On a donc affaire à une panne de lien(s). Le dispositif de contrôle CC détermine une anomalie sur ce ou ces liens et calcule des nouveaux chemins évitant ces liens.
- Aucun paquet de sonde ne reste sans réponse. On peut alors considérer qu'il s'agit d'un « faux positif ». Le dispositif de contrôle CC ne détermine pas de nouveaux chemins et la politique générale de routage reste inchangée.

On peut prévoir que le dispositif de contrôle CC place le lien entre le nœud de signalement et le nœud potentiellement défaillant sous une surveillance particulière. Notamment, si des futures mesures locales remontent le même problème, alors il pourra être décidé de déterminer une anomalie sur ce lien. Le dispositif de contrôle CC peut alors déterminer un nouveau chemin contournant l'anomalie.

Comme décrit précédemment, le (ou les) nouveau chemin est provisionné dans les nœuds particuliers concernés du réseau superposé ON.

Selon ces deux modes de réalisation décrits, le réseau de communication CN s'est adapté de façon transparente pour les utilisateurs et peut être automatique pour le gestionnaire du fournisseur de services en nuage. D'autres algorithmes peuvent être mis en place par le dispositif de contrôle CC, de sorte à fournir cette même capacité de résilience adaptative.

De la même façon, si une panne touche globalement un fournisseur de service internet (ISP), le domaine correspondant peut être évité et calculant les chemins appropriés le contournant et reliant les différents centres de données. Le fournisseur de services en nuage est ainsi totalement indépendant des fournisseurs de services internet.

En conséquence, il n'est plus nécessaire pour les fournisseurs de services en nuage de négocier et acheter des contrats particuliers de fournitures de service SLA (« Service Level Agreement »).

Il est en outre possible de gérer plusieurs chemins reliant deux centres de données. Le dispositif de contrôle CC peut alors effectuer une gestion des chemins en fonction de chaque flot de datagrammes, et attribuer des qualités de service différentes correspondant à des chemins différents, en fonction des flots. Il est ainsi possible de régler un degré de résilience souhaité selon les flots de datagrammes (et donc, par exemple, en fonction du type d'application, du contrat entre le client et le fournisseur de services en nuage, etc.)

Le nouveau chemin à provisionner peut donc aussi dépendre de l'application utilisant les centres de données, et notamment de ses besoins opérationnels : qualité de service (QoS), degré de résilience, bande passante, gigue...

Il est à noter que dans le cadre d'une solution conforme à l'état de la technique utilisant le réseau Internet, une adaptation du réseau de communication peut s'effectuer également mais à un rythme lent, de l'ordre d'environ 5 mn. Pendant ce temps d'adaptation, il n'y a aucune assurance que les flots de données soient correctement acheminés.

L'invention permet d'écourter cette période d'adaptation durant laquelle le réseau se reconfigure, grâce à la combinaison, notamment, du réseau superposé ON et du dispositif de contrôle CC agencés tels que décrits précédemment.

En outre, l'invention fournit une solution technique à des problèmes techniques qui surgissent quand le fournisseur de services en nuage dépend de l'intermédiation de différents fournisseurs d'accès à l'internet, ce qui constitue une situation fréquente en cas de connexion entre centres de données. Dans cette hypothèse, l'Opérateur n'a pas le contrôle du/de(s) réseau(x) par le biais du ou desquels les centres de données sont connectés. Par conséquent, il ne serait pas en mesure d'opérer un reroutage sur la base des procédés connus de l'état de la technique (tels les mécanismes de reroutage conformes au protocole BGP), qui supposent soit une opération au sein d'un même centre de données, soit la maîtrise totale du trafic des données

En outre, le mécanisme de l'invention permet un passage à l'échelle sans limite : en effet, le nombre de données mesurées est moins important, de nature à réduire le temps et effort nécessaire pour procéder à un reroutage. De surcroît, l'invention présente des gains évidents en efficacité, car les mesures de reroutage ne sont pas polluées par les conventions de routage appliquées par les différents fournisseurs d'accès à l'internet. L'invention permet donc à l'Opérateur d'orchestrer le reroutage entre les différents réseaux opérés par les fournisseurs d'accès et de rediriger le trafic en cas d'obstruction ou corruption du trafic.

L'invention permet dès lors de mesure et rerouter le trafic entre multiples centres de données sur base de mesurages de données effectués au niveau des nœuds particuliers.

Bien entendu, la présente invention n'est pas limitée aux exemples et au mode de réalisation décrits et représentés, mais elle est susceptible de nombreuses variantes accessibles à l'homme de l'art. L'invention est définie par l'étendue des revendications.

## Revendications

1. Système comprenant un dispositif de contrôle (CC) et un réseau superposé (ON) à un réseau de communication (CN) destiné à connecter des centres de données (CSP-A, CSP-B, CSP-C, CSP-D) d'un fournisseur de services en nuage, ledit réseau superposé comportant une pluralité de nœuds particuliers (N1, N2, N3... N22), paramétrés de sorte à former des chemins reliant lesdits centres de données, et ledit réseau superposé étant associé audit dispositif de contrôle (CC) ; lesdits nœuds particuliers étant en outre prévus pour transmettre des mesures locales audit dispositif de contrôle, et ledit dispositif de contrôle étant prévu pour, en cas de détermination d'une anomalie à partir desdites mesures locales, calculer un nouveau chemin au sein dudit réseau superposé et provisionner ledit nouveau chemin auprès d'un ensemble de nœuds particulier de ladite pluralité, le système étant **caractérisé en ce que** ledit dispositif de contrôle (CC) est prévu pour construire à partir desdites mesures locales, une série temporelle et pour comparer ladite série temporelle à des informations témoins afin de déterminer ladite anomalie lorsque lesdites informations témoins sont associées à une panne, lesdites informations témoins étant préalablement établies dans une phase d'apprentissage.

2. Système selon la revendication précédente, dans lequel les données transmises d'un premier centre de données vers un second centre de données sont acheminées en utilisant un mécanisme de routage par segments, lesdits segments étant fournis par ledit dispositif de contrôle (CC).

3. Système selon l'une des revendications précédentes, dans lequel les communications entre ledit dispositif de contrôle (CC) et lesdits nœuds particuliers sont conformes au mécanisme « Openflow ».

4. Système selon l'une des revendications précédentes, dans lequel chacun desdits centres de données est connecté à au moins deux domaines du réseau de communication (CN).

5. Systèmeselon l'une des revendications précédentes, dans lequel ledit nouveau chemin est calculé en fonction des besoins opérationnels d'une application utilisant lesdits centres de données.

6. Procédé de gestion d'un réseau superposé (ON) à un réseau de communication (CN) connectant des centres de données (CSP-A, CSP-B, CSP-C, CSP-D) d'un fournisseur de services en nuage, ledit réseau comportant une pluralité de nœuds particuliers (N1, N2, N3... N22), paramétrés de sorte à former des chemins reliant lesdits centres de données, et ledit réseau superposé étant associé à un dispositif de contrôle (CC) ; dans lequel lesdits nœuds particuliers transmettent des mesures locales audit dispositif de contrôle, et ledit dispositif de contrôle, en cas de détermination d'une anomalie à partir desdites mesures locales, calcule un nouveau chemin au sein dudit réseau de communication et provisionne ledit nouveau chemin auprès d'un ensemble de nœuds particulier de ladite pluralité, le procédé étant **caractérisé en ce que** ledit dispositif de contrôle (CC) construit à partir desdites mesures locales, une série temporelle et compare ladite série temporelle à des informations témoins afin de déterminer ladite anomalie lorsque lesdites informations témoins sont associées à une panne, lesdites informations témoins étant préalablement établies dans une phase d'apprentissage.

7. Procédé de gestion selon la revendication précédente, dans lequel chacun dudit au moins domaine est associé à un opérateur de services internet.

8. Procédé de gestion selon la revendication précédente, dans lequel chacun desdits centres de données est connecté à au moins deux domaines dudit réseau de communication (CN).

## Patentansprüche

1. System, umfassend eine Kontrollvorrichtung (CC) und ein einem Kommunikationsnetzwerk (CN) überlagertes Netzwerk (ON), das dazu bestimmt ist, Datenzentren (CSP-A, CSP-B, CSP-C, CSP-D) eines Cloud-Dienstanbieters zu verbinden, wobei das überlagerte Netzwerk eine Vielzahl von einzelnen Knoten (N1, N2, N3...N22) beinhaltet, die derart parametriert sind, um Pfade zu bilden, die die Datenzentren verknüpfen, wobei das überlagerte Netzwerk der Kontrollvorrichtung (CC) zugewiesen ist; wobei die einzelnen Knoten weiter vorgesehen sind, um lokale Messungen zur Kontrollvorrichtung zu übertragen, und die Kontrollvorrichtung vorgesehen ist, um im Falle einer Bestimmung einer Anomalie aus den lokalen Messungen, einen neuen Pfad innerhalb des überlagerten Netzwerks zu berechnen, und den neuen Pfad neben einer Einheit einzelner Knoten aus der Vielzahl auszustatten, wobei das System **dadurch gekennzeichnet ist, dass** die Kontrollvorrichtung (CC) vorgesehen ist, um aus den lokalen Messungen eine Zeitreihe aufzubauen, und um die Zeitreihe mit Beispielinformationen zu vergleichen, um die Anomalie zu bestimmen, wenn die Beispielinformationen einer Panne zugewiesen sind, wobei die Beispielinformationen vorab in einer Lernphase erstellt werden.

2. System nach dem vorstehenden Anspruch, wobei die aus einem ersten Datenzentrum zu einem zweiten Datenzentrum übertragenen Daten unter Verwendung eines Segmente-Routingmechanismus weitergeleitet werden, wobei die Segmente durch die Kontrollvorrichtung (CC) bereitgestellt werden.

3. System nach einem der vorstehenden Ansprüche, wobei die Kommunikationen zwischen der Kontrollvorrichtung (CC) und den einzelnen Knoten dem "Openflow"-Mechanismus entsprechen.

4. System nach einem der vorstehenden Ansprüche, wobei jedes der Datenzentren mit mindestens zwei Domänen des Kommunikationsnetzwerks (CN) verbunden ist.

5. System nach einem der vorstehenden Ansprüche, wobei der neue Pfad in Abhängigkeit von den Betriebserfordernissen einer Anwendung unter Verwendung der Datenzentren berechnet wird.

6. Verfahren zur Verwaltung eines einem Kommunikationsnetzwerk (CN) überlagerten Netzwerks (ON), das Datenzentren (CSP-A, CSP-B, CSP-C, CSP-D) eines Cloud-Dienstanbieters verbindet, wobei das überlagerte Netzwerk eine Vielzahl von einzelnen Knoten (N1, N2, N3...N22) beinhaltet, die derart parametriert sind, um Pfade zu bilden, die die Datenzentren verknüpfen, und das überlagerte Netzwerk einer Kontrollvorrichtung (CC) zugewiesen ist; wobei die einzelnen Knoten lokale Messungen zur Kontrollvorrichtung übertragen, und die Kontrollvorrichtung im Falle einer Bestimmung einer Anomalie aus den lokalen Messungen, einen neuen Pfad innerhalb des überlagerten Netzwerks berechnet, und den neuen Pfad neben einer Einheit einzelner Knoten aus der Vielzahl ausstattet, wobei das Verfahren **dadurch gekennzeichnet ist, dass** die Kontrollvorrichtung (CC) aus den lokalen Messungen eine Zeitreihe aufbaut, und die Zeitreihe mit Beispielinformationen vergleicht, um die Anomalie zu bestimmen, wenn die Beispielinformationen einer Panne zugewiesen sind, wobei die Beispielinformationen vorab in einer Lernphase erstellt werden.

7. Verfahren zur Verwaltung nach dem vorstehenden Anspruch, wobei jede der mindstens einen Domäne einem Internetdienstanbieter zugewiesen ist.

8. Verfahren zur Verwaltung nach dem vorstehenden Anspruch, wobei jedes der Datenzentren mit mindestens zwei Domänen des Kommunikationsnetzwerks (CN) verbunden ist.

## Claims

1. System comprising a control device (CC) and an overlay network (ON) for a communication network (CN) intended to connect data centres (CSP-A, CSP-B, CSP-C, CSP-D) of a cloud service provider, said overlay network including a plurality of particular nodes (N1, N2, N3... N22), configured so as to form paths connecting said data centres, and said overlay network being associated with said control device (CC); said particular nodes furthermore being intended to transmit local measurements to said control device, and said control device being intended to, in the event that an anomaly is determined from the local measurements, calculate a new path within said overlay network and to supply said new path with a particular set of nodes of said plurality, the system being **characterised in that** said control device (CC) is intended to build from said local measurements a time series and to compare said time series to control information in order to determine said anomaly when said control information is associated with a breakdown, said control information being established beforehand in a learning phase.

2. System according to the preceding claim, wherein the data transmitted from a first data centre to a second data centre are routed by using a segment routing mechanism, said segments being provided by said control device (CC).

3. System according to one of the preceding claims, wherein the communications between said control device (CC) and said particular nodes comply with the "OpenFlow" mechanism.

4. System according to one of the preceding claims, wherein each of said data centres is connected to at least two domains of the communication network (CN).

5. System according to one of the preceding claims, wherein said new path is calculated based on the operational needs of an application using said data centres.

6. Method for managing an overlay network (ON) for a communication network (CN) connecting data centres (CSP-A, CSP-B, CSP-C, CSP-D) of a cloud service provider, said network including a plurality of particular nodes (N1, N2, N3... N22), configured so as to form paths connecting said data centres, and said overlay network being associated with a control device (CC); wherein said particular nodes transmit local measurements to said control device, in the event that an anomaly is determined from the local measurements, calculates a new path within said communication network and supplies said new path with a particular set of nodes of said plurality, the method being **characterised in that** said control device (CC) builds from said local measurements a time series and compares said time series to control information in order to determine said anomaly when said control information is associated with a breakdown, said control information being established beforehand in a learning phase.

7. Management method according to the preceding claim, wherein each of said at least one domain is associated with an internet service operator.

8. Management method according to the preceding claim, wherein each of said data centres is connected to at least two domains of said communication network (CN) .
